Europäisches Patentamt

European Patent Office

Office européen des brevets

(11) Numéro de publication: **0 101 883**
**B1**

(12) **FASCICULE DE BREVET EUROPEEN**

(45) Date de publication du fascicule du brevet: **24.02.88**

(21) Numéro de dépôt: **83107061.0**

(22) Date de dépôt: **19.07.83**

(51) Int. Cl.⁴: **G 01 S 15/87**

(54) Procédé de mesure d'écartométrie acoustique.

(30) Priorité: **21.07.82 FR 8212742**

(43) Date de publication de la demande:
**07.03.84 Bulletin 84/10**

(45) Mention de la délivrance du brevet:
**24.02.88 Bulletin 88/08**

(84) Etats contractants désignés:
**FR GB IT**

(56) Documents cités:
**FR-A-2 091 906**
**GB-A-2 089 043**
**US-A-4 229 809**

**THE OIL AND GAS JOURNAL, vol. 62, no. 38, 21 septembre 1964, pages 196-199, Tulsa, Okla., US; L.C.ROGERS: "Deepwater-positioning problems solved for Mohole rig"**

**THE REVIEW OF SCIENTIFIC INSTRUMENTS, vol. 37, no. 11, novembre 1966, pages 1450-1455, New York, US; M.S.McGEHEE et al.: "MPL acoustic transponder"**

(73) Titulaire: **SINTRA-ALCATEL Société Anonyme dite:**
**26, rue Malakoff B.P. 245**
**F-92600 Asnieres Cedex (FR)**

(72) Inventeur: **Leroy, Claude**
**Villa Angélica 368 Bd. de Gravier**
**F-83150 Bandol (FR)**
Inventeur: **Parent, Guy**
**81 Bd. du Moulin de la Tour**
**F-92350 Le Plessis Robinson (FR)**

(74) Mandataire: **Turlèque, Clotilde et al**
**THOMSON-CSF SCPI 19, avenue de Messine**
**F-75008 Paris (FR)**

Courier Press, Leamington Spa, England.

## Description

La présente invention est relative à un procédé d'écartométrie acoustique, destiné principalement à mesurer l'écart de position d'un navire par rapport à un point fixe du fond de l'eau; le résultat de la mesure est fourni à un système de positionnement dynamique du navire par rapport audit point.

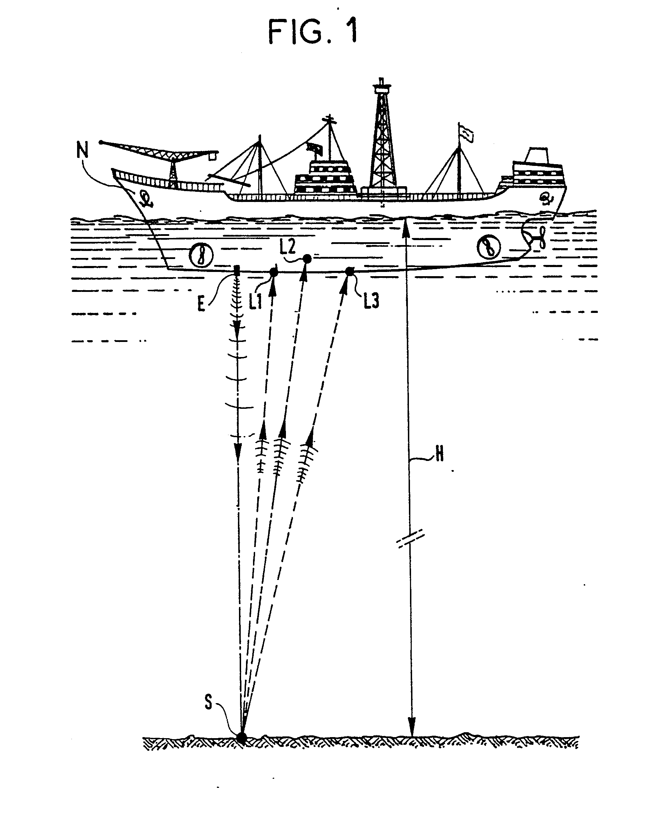

Les dispositifs d'écartométrie acoustique connus comprennent essentiellement (figure 1) un émetteur E d'ondes acoustiques placé sur le navire N et émettant vers le fond en direction d'un répondeur acoustique S placé au fond de l'eau au point fixe ou à son voisinage. Le répondeur S émet, en réponse aux signaux sonores reçus, une impulsion qui est reçue par un groupe d'hydrophones L1, L2, L3 disposés sous le navire selon un polygone. La mesure des différences de temps de parcours des trajets acoustiques SL1, SL2, SL3 séparant le répondeur du fond des hydrophones de bord permet, connaissant en outre l'une au moins des distances L1 L2, L2 L3, L1 L3 séparant les hydrophones ou la profondeur H de l'leau, de déterminer l'écart entre la verticale passant par l'émetteur de bord et le répondeur du fond. On se référera pour plus de détail sur le calcul aux publications ci-après:

— Système d'ancrage dynamique du PELICAN.

Colloque GRETSI, Nice 1973 par Claude LEROY.

— Localisation sous-marine précise dans les trois dimensions.

Colloque GRETSI, Nice 1973, par Claude LEROY.

— Acoustic measuring system and its performances.

Preprints of the 1974 OTC Conférence Vol. 1 6—8 Mai 1974.

Houston Texas par Claude DI GIACOMO, Claude LEROY et Jean FROST.

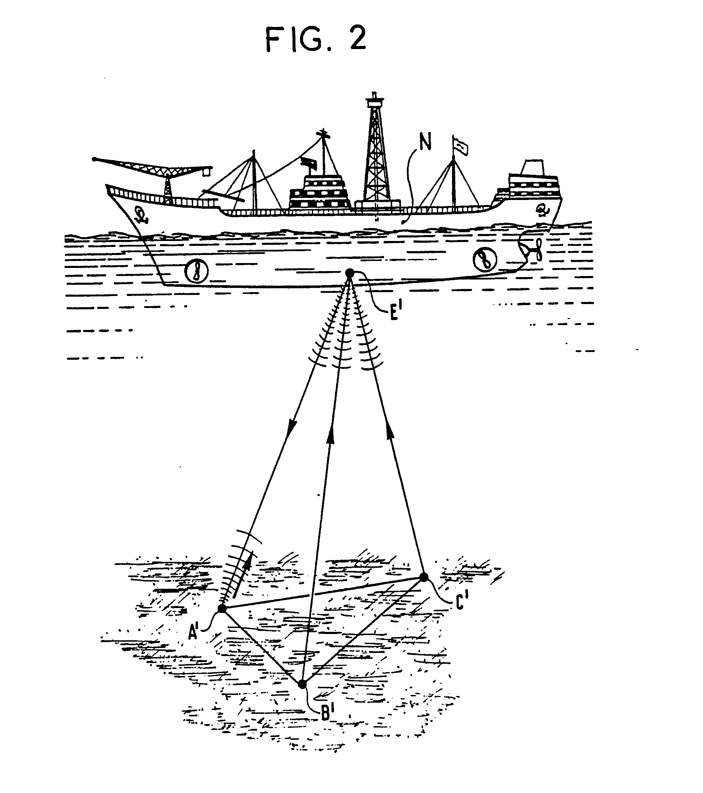

Dans d'autres dispositifs d'écartométrie connus (figure 2), un émetteur-récepteur acoustique E' est placé sous le navire et interroge des répondeurs A', B', C' disposés au fond de l'eau au voisinage du point fixe. La mesure des écarts de trajet E'A', E'B', E'C' conduit aux mêmes résultats que précédemment.

Dans un article intitulé "Deepwater-positioning problems solved for Mohole rig" paru dans The Oil and Gas Journal, volume 62, numéro 28, pages 196—199, on a décrit une plate forme de forage comportant entre autres deux systèmes d'écartométrie acoustique, l'un dit "short-baseline" conforme au système de la figure 1, et l'autre dit "long-baseline" conforme au système de la figure 2. Ces dispositifs fonctionnent à une fréquence voisine de 10 KHZ qui permet de surmonter au moins en partie les problèmes d'atténuation des ondes acoustiques sur leur trajet. Le système "short-baseline" apparaît être utilisé essentiellement pour positionner de manière approximative la plate-forme afin de mouiller les répondeurs nécessaires au système "long-baseline" qui procurera une meilleure précision. L'interrogateur-récepteur de ce système "long-baseline" est attaché à l'extrémité d'un filin accroché à la plate-forme, probablement pour l'immerger à une profondeur lui permettant d'échapper partiellement au bruit des systèmes de forage qui perturbent alors le système "short-baseline". La liaison entre cet interrogateur-récepteur et les circuits de traitement n'est pas décrite car elle se fait sûrement de manière très banale par un câble éventuellement incorporé au filin porteur.

Il n'est décrit aucun moyen permettant de compenser les mouvements relatifs de l'interrogateur-récepteur dus à cette liaison par un filin. Ces mouvements existent nécessairement puisque dans le système "short-baseline" on utilise un dispositif de compensation du tangage et du roulis. Pour limiter les effets de ces mouvements, le filin doit être assez court, ce qui augmente l'influence du bruit. Il est explicitement écrit que ces systèmes fonctionnent indépendemment les uns des autres et que le pilote sélectionne manuellement l'un d'entre eux selon les circonstances.

Les dispositifs qui viennent d'être décrits sont inutilisables lorsque le navire est lui-même une source importante de bruit (navire ou plate-forme de forage par exemple) et que la profondeur de la mer dépasse 3.000 mètres, s'ils fonctionnent sur une fréquence assez haute de l'ordre de 25 kHz.

En effet, le signal reçu par le ou les hydrophones de bord, très atténué par son long trajet dans l'eau, est dominé par le bruit environnant, de telle sorte que si aucune modification n'est apportée au dispositif l'exploitation des signaux devient impossible.

Une première modification envisagée est d'augmenter la puissance du (ou des) répondeurs; or si un répondeur de type courant à 25 kHz nécessite une puissance de 4 kW lorsqu'il fonctionne à 3.000 mètres de profondeur, il exige une puissance de 2000 kW à 6000 mètres de profondeur, sachant que l'atténuation d'un signal sonore est de 7 dB/km; en effet, par rapport à une source placée à 3000 mètres, une source à 6000 mètres fournit en surface un signal dont l'affaiblissement, exprimé en dB est de

$$20 \log \frac{6000}{3000}$$

(divergence), augmenté de 7 × 3, soit environ 27 dB. Doter le (ou les) répondeurs d'une puissance de l'ordre du millier de kW n'est pas envisageable, si on sait que les installations doivent pouvoir fonctionner plusieurs mois sans interruption.

Une seconde modification envisagée est d'utiliser des répondeurs directifs fonctionnant à plus basse fréquence, comme dans l'article ci-dessus, (par exemple 10 à 12 kHz), pour lesquels la propagation se fait avec une atténuation plus faible (1,5 dB/km).

Cette solution n'est pas souhaitable, car elle nécessite des études importantes de mise au point et de fabrication d'un nouveau répondeur et conduit à une précision de mesure inférieure.

Par ailleurs, elle nécessite le remplacement des hydrophones existants, ce qui revient à rendre périmés les matériels existants.

Dans le brevet US 4,229,809, on a décrit un système de localisation dans lequel on repère la position d'un bateau en interrogeant depuis celui-ci plusieurs répondeurs situés sur le fond de la mer. Ce système est tout-à-fait semblable au système "long-baseline" du document précédent et en présente donc tous les désavantages. On repère aussi la position d'un poisson tracté par le bateau d'une part en recevant sur un hydrophone fixé à ce poisson les signaux émis par les répondeurs du fond et en les retransmettant au bateau par le câble de traction, ainsi qu'en interrogeant depuis le bateau un répondeur fixé sur le poisson. Comme il n'y a donc qu'une seule liaison acoustique directe entre le bateau et le poisson, les autres signaux étant transmis par le câble, ce système ne permettrait pas de déterminer directement sans les répondeurs de fond la position relative du poisson par rapport au bateau, et par ailleurs c'est uniquement cette position relative qui est déterminée et non pas la position absolue des deux par rapport au fond de l'eau puisque "la position effective des répondeurs de fond n'est pas nécessaire".

Les buts de la présente invention sont donc de faire des mesures d'écartométrie acoustique pour des navires bruyants et des fonds importants (plus de 3000 mètres et en particulier 6000 mètres de profondeur), sans modifier les appareils existants et sans les doter d'un accroissement de puissance important.

La présente invention a pour objet un procédé conforme à la revendication 1.

L'invention est précisée par la description ci-après d'un exemple préféré de réalisation de l'invention en référence au dessin ci annexé dans lequel:

— les figures 1 et 2 sont des illustrations des dispositifs connus d'écartométrie

— la figure 3 est un schéma montrant les positions des divers éléments du dispositif de l'invention avec figuration des trajets des signaux émis.

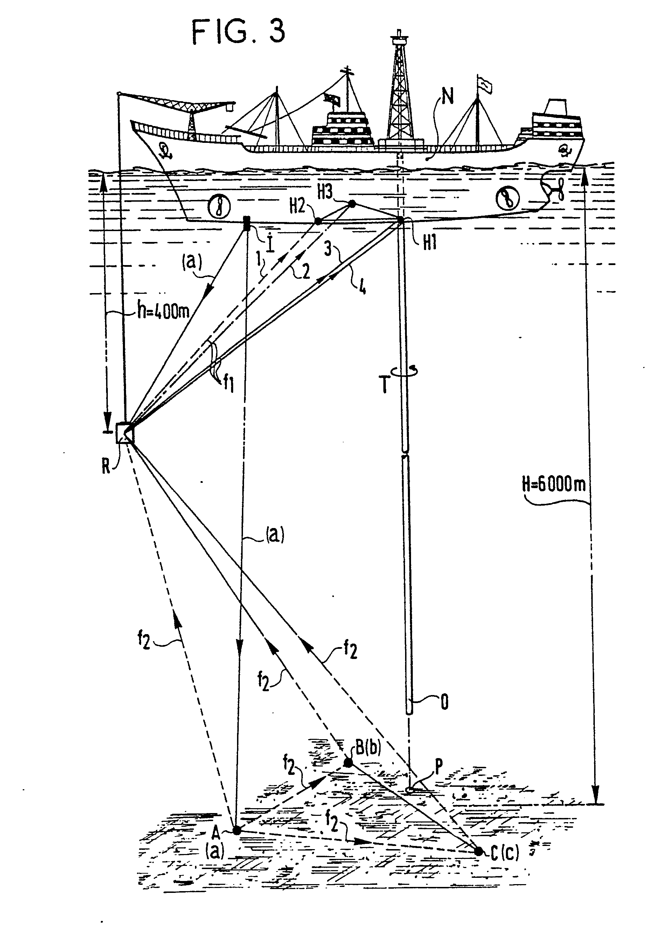

La figure 3 est un schéma explicatif de l'invention qui montre les divers éléments constitutifs du dispositif de l'invention et qui illustre son procédé de mise en oeuvre.

Le navire N est par exemple un bâtiment (ou une plate-forme de forage) associé à des moyens d'ancrage dynamique qui nécessitent pour leur mise en oeuvre la connaissance, à des intervalles de temps rapprochés (par example de l'ordre de la seconde) de sa position par rapport à un point de fond, qui par exemple est l'entrée P d'un puits de forage.

On rappelle que les conditions d'exploitation contiennent deux contraintes irréductibles:

a) le bateau émet du bruit à un niveau élevé notamment par ses moteurs de positionnement et d'entraînement du train de tiges qui viennent s'ajouter au bruit de la mer.

b) la profondeur est supérieure à 3000 mètres.

Le dispositif de l'invention comprend trois séries d'organes:

I — *sous la coque du navire*

Il y a au moins trois récepteurs acoustiques (hydrophones) disposés selon un triangle horizontal H1, H2, H3. Dans les navires où il existe déjà quatre hydrophones disposés en rectangle, on utilisera trois hydrophones en service normal, le quatrième étant utilisé en secours en cas de panne de l'un des trois autres.

Ces hydrophones assurent la détection de l'instant d'arrivée d'impulsions acoustiques de forme donnée émises à une fréquence donnée f1 (par exemple 32 kHz).

Sous le navire est placé au moins un émetteur acoustique I. Il s'agit d'un transducteur d'interrogation émettant un signal sonore constituant un code d'interrogation et réalisé par une combinaison appropriée de deux ou trois fréquences (7, 9 et 11 kHz par exemple). Certains navires sont équipés de deux transducteurs du type précité. Dans ce cas un seul sera utilisé en fonctionnement normal, le second étant utilisé en secours en cas de panne du premier.

Nois désignerons par a, b, c trois codes utilisés par le transducteur I.

II — *au fond de la mer*

Au fond de la mer sont disposés au moins trois répondeurs acoustiques A, B, C répondant respectivement à une interrogation par code a, b et c. Ils sont disposés selon un triangle au voisinage du point P.

Les côtés du triangle sont à peu près égaux et de longueur comprise de préférence entre 5 et 8% de la profondeur de la mer. Pour une profondeur de 6000 mètres, on prendra des côtés entre 300 et 500 mètres. Les répondeurs acoustiques A, B, C sont placés par largage depuis le navire ou depuis un navire auxiliaire. On suppose que les distances AB, BC et CA sont connues (on montrera plus loin comment on peut avoir accès à cette connaissance).

Les caractéristiques acoustiques des répondeurs A, B, C sont les suivantes:

A) ils répondent par une impulsion de niveau et forme déterminée à une fréquence donnée f2 (par exemple 25 kHz) dans les deux cas suivants:

1. réception de leur code propre d'interrogation a, b, c, comme il a déjà été fait mention plus haut.

2. détection, au-dessus d'un seuil donné d'une impulsion à la fréquence f2 émise par l'un quelconque de leurs voisins A, B, C.

B) Une fois une impulsion émise pour l'une des deux raisons énoncées en A), les répondeurs sont rendus inactifs pendant une durée donnée fixe (par exemple une seconde) imposée par les dimensions maximales du polygone ABC.

C) l'émission à la fréquence f2 d'une impulsion se fait avec un certain retard par rapport à l'instant d'arrivée de la cause qui l'a déclenchée; les divers répondeurs ont des temps de retard différents (tA pour A, tB pour B, tC pour C) de telle sorte que les réponses soient émisent selon une séquence déterminée permettant l'identification ultérieure des impulsions.

### III — *en immersion*

A une distance du navire où le bruit du navire est très atténué, est disposé un émetteur-récepteur acoustique R de relais. Cet émetteur sera de préféfence immergé à une profondeur h voisine de 7% de la profondeur de la mer à l'endroit considéré, ce qui pour une profondeur de 6000 mètres, conduit à placer l'émetteur-récepteur relais à environ 400 mètres du niveau de la mer.

La suspension est faite soit au moyen d'une bouée rattachée au navire à 200 mètres environ, soit (cas de la figure) à une grue du bateau. On peut même envisager, dans le cas d'un navire de forage, de fixer l'émetteur-récepteur relais sur un arceau maintenu autour du train de tiges de forage tout en laissant à ce dernier sa liberté de rotation.

Le relais comprend à sa partie supérieure un répondeur acoustique et à sa partie inférieure un hydrophone. Ces éléments sont agencés pour fonctionner de la manière suivante:

— le relais répond par une impulsion à la fréquence f1 sur réception d'un quelconque des codes a, b et c. Celle-ci est émise avec un léger retard connu to.

— le relais répond par une impulsion à la fréquence f1, avec le même retard to, à la détection de chaque impulsion à la fréquence f2.

En cours de fonctionnement la position des répondeurs A, B et C est supposée connue (longueurs des côtés du triangle, orientation par rapport au nord); on verra plus loin comment parvenir à cette connaissance.

Le transducteur I émet l'un des codes a, b ou c, par exemple de code a.

Le relais R détecte le code a et répond par une émission à la fréquence f1. Les réponses (trajets 1, 2 et 3 de la figure 3) sont détectées par les hydrophones H1, H2 et H3 et à partir de ces réponses le calcul des distances RH1, RH2 et RH3 est effectué. Connaissant par ailleurs l'orientation du navire, les coordonnés du point R sont déterminées sans ambiguité. (Le calcul est le même que celui effectué avec une base courte classique comme dans la figure 1).

Le répondeur A détecte son code a et en réponse émet une impulsion à f2, qui déclenche les réponses à la fréquence f2 des deux autres hydrophones B et C.

Les réponses, émises avec les temporisations propres à chaque émetteur de fond, sont reçues par le ralais R qui, en réponse, réémet à la fréquence f1; l'un des hydrophones (H1 dans le cas de la figure) reçoit cette réémission (trajet 4 de la figure 3) et transmet du navire au calculateur qui en déduit les différences des trajets RB—RA, RC—RA, RB—RC et par suite les longueurs des arêtes de la pyramide RABC, connaissant la profondeur h d'immersion du relais et la profondeur H du fond de la mer.

Connaissant ainsi la position du ralais R par rapport au navire d'une part, et par rapport au fond d'autre part, on obtient la position du navire par rapport au fond.

Le dispositif de l'invention permet de résoudre le problème posé par le bruit du navire.

On a vu plus haut que passer de 3000 à 6000 mètres de hauteur d'eau faisait perdre 27dB sur le signal reçu pour une impulsion sonore à 25 kHz. En fait c'est le rapport signal/bruit qu'il convient de préserver pour assurer la mesure qui était possible à 3000 mètres. Or le bruit (pouvant atteindre 40dB de plus que celui de la mer force 6) est essentiellement dû au navire. Dans la situation classique les hydrophones sont à environ 40 mères de profondeur, le bruit sera réduit de

$$20 \log \frac{400}{40} = 20\text{dB (divergence)}$$

plus $7 \times 0,4 = 2,8$dB (absorption), soit au total 22,8dB.

D'autre part, le signal aura gagné en niveau

$$20 \log \frac{6000}{5600} + 7 \times 0,4 = 3,4\text{dB.}$$

Au total on a donc gagné 22,8 + 3,4 = 26,2dB soit pratiquement les 27dB recherchés.

Le dispositif de l'invention permet d'obtenir une mesure de position toutes les secondes environ; le dispositif fonctionne tant que le navire ne s'écarte pas de plus de 300 mètres + 10% de la profondeur de la mer, ce qui rend le dispositif applicable pour tous types d'opérations connues, en particulier pour l'ancrage dynamique au-dessus d'un point de consigne.

Le dispositif ne nécessite, pour sa mise en oeuvre que du matériel classique ayant été déjà éprouvé.

On notera que les répondeurs A, B et C ne peuvent répondre sur des signaux émis par un de leurs voisins et réfléchis à la surface de la mer.

Le temps de parcours de tels signaux est bien supérieur à la durée d'inhibition des répondeurs; mais le niveau de ces signaux est en revanche bien inférieur au seuil de fonctionnement des répondeurs, en raison de l'affaiblissement dû au long parcours dans l'eau.

Le relais R ne peut répondre à une émission issue de A ou B et réfléchie à la surface de la mer en raison de la directivité du transducteur dont il est équipé et qui atténue d'au moins 30dB un signal déjà affaibli de 5dB par rapport à l'arrivée directe.

On a dit plus haut que les coordonnées de A, B et C étaient connus. On les obtient de la manière suivante: le navire étant supposé immobilisé pendant le temps de mesure, on interroge successivement, à l'aide de l'émetteur I, les répondeurs A et B. Soit H1 l'hydrophone de bord utilisé en réception.

Les temps de parcours respectifs des signaux allant en A, parcourant AB, allant en B et parcourant BA sont mesurés et sont liés par les relations suivantes.

$$TA = (IA + AR + RH1)/C + tA + to$$
$$TAB = (IA + AB + BR + RH1)/C + tA + tB + to$$
$$TB = (IB + BR + RH1)/C + tB + to$$
$$TBA = (IB + BA + AR + RH1)/C + tB + tA + to$$

C étant la célérité du son; on en tire:

$$2 AB = [(TAB + TBA) - (TA + TB) + (tA + tB)] \times C$$

On reprend les mêmes mesures pour les côtés BC et CA.

Pour parfaire l'étalonnage, il faut encore disposer de l'orientation du triangle par rapport à une direction connue comme celle du nord.

On utilise pour cela un autre relais R' (non représenté) disposé à une distance connu de R et selon une orientation RR' connue.

On mesure alors à l'aide de l'émetteur I, et comme indiqué dans la description du fonctionnement du dispositif de l'invention, les caractéristiques de la pyramide R'ABC.

Le calcul des longueurs RA et RB ainsi que R'A et R'B permet de positionner le triangle ABC par rapport à la ligne RR'.

En réalité, pour réduire les erreurs, on ne procède pas à une seule mesure mais à plusieurs mesures qui sont traitées par des méthodes statistiques.

Pour la rentrée d'un outil dans un puits de forage P déjà existant, on peut munir l'extrémité du train de tiges d'un hydrophone O captant les émissions à f2 résultant de l'interrogation d'un des hydrophones A, B ou C. L'hydrophone O relié par câble au navire transmet alors des signaux correspondant aux différences des temps de trajet OA—OB, OA—OC, OB—OC.

On en déduit OA, OB et OC ce qui permet de corriger la position du train de tiges par rapport au puits.

**Revendications**

1. Procédé de mesure d'écartométrie acoustique pour mesurer l'écart d'un navire (N) par rapport à la verticale d'un point fixe (P) du fond de l'eau, dans lequel on émet un signal codé (a) vers le fond de l'eau, on reçoit, ce signal sur un premier émetteur-récepteur (A) acoustique situé sur le fond de l'eau, on réémet à partir de ce premier émetteur-récepteur (A) en réponse à ce signal codé une première fréquence ($f_2$) vers la surface de l'eau, on reçoit au moyen d'un récepteur acoustique (R) immergé cette première fréquence, ainsi que les deuxième et troisième fréquences émises à partir d'un deuxième et d'un troisième émetteur-récepteur situés aussi sur le fond de l'eau (B, C), et on détermine ledit écart à partir de l'instant d'émission dudit signal codé (a) et des instants de réception desdits première, deuxième et troisième fréquences, caractérisé en ce que l'on émet ledit signal codé (a) depuis un émetteur acoustique (I) fixé au navire, que l'on immerge ledit récepteur acoustique (R) à une profondeur (h) telle que les bruits propres du navire sont très affaiblis, que l'on utilise ledit récepteur acoustique immergé (R) comme relais pour émettre vers la surface de l'eau en réponse audit signal codé (a) une quatrième fréquence ($f_1$) différente de ladite première fréquence ($f_2$), que l'on reçoit cette quatrième fréquence sur trois récepteurs (H1—H3) fixés sur la coque du navire (N), que l'on détermine la position dudit relais (R) par rapport au navire à partir de l'instant d'émission dudit signal codé (a) et des instants de réception de ladite quatrième fréquence, que l'on émet lesdits deuxième et troisième fréquences en réponse à la réception par lesdits deuxième et troisième émetteurs-récepteurs (B, C) de ladite première fréquence, que ces deuxième et troisième fréquences sont identiques à ladite première fréquence ($f_2$), que l'on émet ces fréquences indentiques ($f_2$) à l'aide des premier, deuxième et troisième émetteurs-récepteurs (A, B, C) avec des retards distincts permettant de les identifier, que l'on émet à partir dudit relais (R) en réponse à la réception de chacune desdits première, deuxième et troisième fréquences ($f_2$) une cinquième fréquence identique à ladite quatrième fréquence ($f_1$), que l'on reçoit cette cinquième fréquence respectivemenent sur chacun des trois récepteurs (H1—H3) de coque, et que l'on détermine ledit écart à partir de l'instant d'émission du signal codé (a), des instants de réception de cette cinquième fréquence et de la position du relais (R) préalablement déterminée.

2. Procédé selon la revendication 1, caractérisé en ce que l'on n'émet les première, deuxième et troisième fréquences ($f_2$) que lorsque le signal codé (a) est reçu avec un niveau supérieur à un seuil déterminé pour éliminer les signaux reçus après réflexion par la surface de l'eau.

3. Procédé selon l'une quelconque des revendications 1 et 2, caractérisé en ce que l'on reçoit sur ledit relais (R) les première, deuxième et troisième fréquences ($f_2$) en atténuant fortement les signaux provenant de la surface de l'eau.

4. Procédé selon l'une quelconque des revendications 1 à 3, caractérisé en ce que l'on émet successivement trois signaux codés différents (a, b, c) qui interrogent successivement les premier, deuxième et troisième émetteurs-récepteurs (A, B, C).

**Patentansprüche**

1. Verfahren zur akustischen Ablagemessung zum Messen des Vertikalabstandes eines Schiffs (N) zu einem festen Punkt (P) des Wassergrundes, in dem ein codiertes Signal (a) zum Wassergrund ausgesandt wird, dieses Signal auf einem ersten akustischen Sender/Empfänger (A) auf dem Wassergrund empfangen wird, von diesem Sender/Empfänger (A) auf das codierte Signal antwortend eine erste Frequenz ($f_2$) zur Wasser-

oberfläche ausgesandt wird, mittels eines akustischen Unterwasserempfängers (R) diese erste Frequenz, genauso wie die zweite und die dritte Frequenz empfangen wird, die von einem zweiten und einem dritten Sender/Empfänger (B, C) ausgesandt wird, die auch auf dem Wassergrund gelegen sind, und in dem der Abstand ausgehend vom Sendezeitpunkt des codierten Signals (a) und den Empfangszeitpunkten der ersten, zweiten und dritten Frequenz bestimmt wird, dadurch gekennzeichnet, daß das codierte Signal (a) von einem akustischen Sender (I), der am Schiff befestigt ist, gesendet wird, daß der akustische Empfänger (R) in einer Tiefe (h) eingetaucht wird, in der die Eigengeräusche des Schiffes sehr abgeschwächt sind, daß der akustische Unterwasserempfänger (R) als Relais zum Aussenden einer von der ersten Frequenz (f₂) unterschiedlichen vierten Frequenz (f₁) zur Wasseroberfläche hin in Antwort auf das codierte Signal (a) verwendet wird, daß diese vierte Frequenz auf drei Empfängern (H1—H3) empfangen wird, die am Rumpf des Schiffes (N) befestigt sind, daß die Lage des Relais (R) bezüglich des Schiffs ausgehend vom Sendezeitpunkt des codierten Signals (a) und den Empfangszeitpunkten der vierten Frequenz bestimmt wird, daß die zweite und die dritte Frequenz ansprechend auf den Empfang der ersten Frequenz durch den zweiten und den dritten Sender/Empfänger ausgesendet werden, daß die zweite und die dritte Frequenz mit der ersten Frequenz (f₂) gleich ist, daß diese gleichen Frequenzen (f₂) mit Hilfe des ersten, zweiten und dritten Senders/Empfängers (A, B, C) mit verschiedenen Verzögerungen ausgesandt werden, die deren Identifikation ermöglichen, daß ausgehend vom Relais (R) in Antwort auf den Empfang jeder der ersten, zweiten und dritten Frequenz (f₂) eine fünfte Frequenz ausgesandt wird, die der vierten Frequenz (f₁) gleich ist, daß diese fünfte Frequenz jeweils auf jedem der drei Empfänger (H1—H3) des Rumpfes empfangen wird, und daß der Abstand aus dem Sendezeitpunkt des codierten Signals (a), den Empfangszeitpunkten der fünften Frequenz und der vorbestimmten Lage des Relais (R) bestimmt wird.

2. Verfahren nach Anspruch 1, dadurch gekennzeichnet, daß die erste, zweite und dritte Frequenz (f₂) nur dann ausgesandt werden, wenn das codierte Signal (a) mit einem über einer festgelegten Schwelle liegenden Pegel empfangen wird, um die nach Reflexion durch die Wasseroberfläche empfangenen Signale zu eliminieren.

3. Verfahren nach einem der Ansprüche 1 und 2, dadurch gekennzeichnet, daß auf dem Relais (R) die erste, zweite und dritte Frequenz (f₂) unter starker Dämpfung der von der Wasseroberfläche kommenden Signale empfangen werden.

4. Verfahren nach einem der Ansprüche 1 bis 3, dadurch gekennzeichnet, daß nacheinander drei verschiedene codierte Signale (a, b, c) ausgesandt werden, die nacheinander den ersten, zweiten und dritten Sender/Empfänger (A, B, C) abfragen.

**Claims**

1. Method of acoustic distance measurement for measuring the vertical distance of a vessel (N) from a fixed point (P) at the bottom of the water, wherein a coded signal (a) is emitted in the direction of the bottom of the water, this signal is received by a first acoustic transmitter-receiver (A) located at the bottom of the water, a first frequency (f₂) is emitted in the direction of the water surface from this first transmitter-receiver (A) in response to this coded signal, this first frequency is received by means of an immersed acoustic receiver (R), and likewise the second and third frequencies emitted by a second and by a third transmitter-receiver, respectively, likewise located at the bottom of the water (B, C), and said distance is determined from the moment of emission of said coded signal (a) and the moments of reception of said first, second, and third frequencies, characterized in that said coded signal (a) is emitted from an acoustic emitter (I) affixed to the vessel, that said acoustic receiver (R) is immersed with a depth (h) which is such that the inherent noise of the vessel is greatly attenuated, that said immersed acoustic receiver (R) is used as a relay for emitting in the direction of the water surface and in response to said coded signal (a) a fourth frequency (f₁) different from the first frequency (f₂), that this fourth frequency is received by three receivers (H1—H3) affixed to the body of the vessel (N), that the position of said relay (R) with respect to the vessel is determined from the moment of emission of said coded signal (a) and the moments of reception of the fourth frequency, that said second and third frequencies are emitted in response to the reception of said first frequency by said second and third transmitters-receivers (B, C), that these second and third frequencies are identical with said first frequency (f₂), that these identical frequencies (f₂) are emitted by means of the first, second and third transmitters-receivers (A, B, C) with different delays permitting their identification, that a fifth frequency identical with said fourth frequency (f₁) is emitted from said relay (R) in response to the reception of each of said first, second and third frequencies, that this fifth frequency is respectively received by each of the three receivers (H1—H3) of the body and in that said distance is determined from the moment of emission of the coded signal (a), the moments of reception of this fifth frequency and the previously determined position of the relay.

2. Method according to claim 1, characterized in that the first, second and third frequencies (f₂) are emitted only when the coded signal (a) is received with a level exceeding a determined threshold for eliminating signals received after reflection by the water surface.

3. Method according to any of claims 1 and 2, characterized in that the first, second and third frequencies (f₂) are received by said relay (R) with a strong attenuation of the signals originating from the water surface.

4. Method according to any of claims 1 to 3, characterized in that three different coded signals (a, b, c) are successively emitted for successively interrogating the first, second and third transmitters-receivers (A, B, C).

# FIG. 1

0 101 883

# FIG. 2

# FIG. 3